# EUROPEAN PATENT APPLICATION

(11) **EP 4 609 700 A1**
(43) Date of publication of application: **03.09.2025**
(21) Application number: 25711590.7
(22) Date of filing: 13.01.2025
(51) Int. Cl.: A01G 9/02, A01G 9/04, A01G 27/06, A01G 13/00

(54) **PLANT-POTTING DEVICE**

(30) Priority: 19.01.2024 CN 202420134962 U
(71) Applicant: Shanghai Sainuowei Technology Development Co., Ltd., Shanghai 200126 (CN)
(72) Inventor: LUO, Jia, Shanghai 200080 (CN); DUAN, Yunfei, Shanghai 200080 (CN); ZHOU, Liang, Shanghai 200080 (CN); GU, Zhengteng, Shanghai 200080 (CN); LIU, Yong, Shanghai 200080 (CN)
(74) Representative: Zanettin, Gianluigi
(86) International application number: PCT/CN2025/072021
(87) International publication number: WO 2025/152890

(57) **Abstract**

A potting device, including a water storage basin (1), a tray (2), and a water-absorbing growbag (3), where the tray (2) laps on the water storage basin (1), and the water-absorbing growbag (3) is placed on the tray (2); the potting device further includes a first watering structure (4) or a second watering structure (5); the first watering structure (4) includes a water-absorbing rope (41) lapping on the tray (2), a portion of the water-absorbing rope (41) is submerged in water in the water storage basin (1), and the water-absorbing growbag (3) overlies on the water-absorbing rope (41); the second watering structure (5) includes a pipe assembly and a water pump (51) disposed inside the water storage basin (1), an input end of the water pump (51) communicates with the interior of the water storage basin (1), and an output end of the water pump (51) communicates with a planting soil in the water-absorbing growbag (3) through the pipe assembly.

## Description

This application claims priority to Chinese Patent Application No. 202420134962.5 filed with the China National Intellectual Property Administration (CNIPA) on Jan. 19, 2024, the disclosure of which is incorporated herein by reference in its entirety.

### TECHNICAL FIELD

The present disclosure relates to the field of potting technology, for example, a potting device.

### BACKGROUND

A potting device is a device for cultivating or growing plants and has been widely used in the fields of indoor planting, cultivation of plants for medical purposes, and the like. A potting device in the related art mainly consists of a potting device body, a tray, a water storage tank, and a pump. The tray is disposed above the water storage tank. The potting device body is disposed above the tray. A support frame is disposed in the potting device body. The side surface of the support frame is spirally wound with a watering pipe. A watering hole is disposed on a side of the watering pipe close to the center of the potting device body. A through hole is disposed at the center of the bottom of the potting device body, and a drainage hole is disposed around the through hole. The water may be pumped out of the water storage tank through a water pump and transported to the potting device body through the watering pipe so that plants in the potting device body may be automatically watered. However, the structure of the potting device body of such a potting device is complex, and the watering effect of the potting device on plants is poor.

### SUMMARY

The present disclosure provides a potting device to solve the problems in the related art that the structure of the potting device body of a potting device is complex and the watering effect of the potting device on plants is poor.

The potting device includes a water storage basin, a tray, and a water-absorbing growbag. The tray laps on the water storage basin. The water-absorbing growbag is placed on the tray.

The potting device further includes a first watering structure or a second watering structure. The first watering structure includes a water-absorbing rope lapping on the tray. A portion of the water-absorbing rope is submerged in water in the water storage basin. The water-absorbing growbag overlies on the water-absorbing rope. The second watering structure includes a pipe assembly and a water pump disposed in the water storage basin. An input end of the water pump communicates with the interior of the water storage basin, and an output end of the water pump communicates with a planting soil in the water-absorbing growbag through the pipe assembly.

In an embodiment, the first watering structure further includes a rubber plug, and a socket communicating with the interior of the water storage basin is disposed on the tray. The rubber plug is inserted into the socket. The water-absorbing rope is threaded through the rubber plug and is partially submerged in the water in the water storage basin.

In an embodiment, multiple rubber plugs are provided. The multiple rubber plugs are distributed at intervals in the circumferential direction of the tray. Each rubber plug is provided with two spaced lapping holes.

One water-absorbing rope is disposed between two lapping holes close to each other of any two adjacent rubber plugs, and two ends of the water-absorbing rope are threaded through the two lapping holes, respectively.

In an embodiment, the pipe assembly includes a pipe joint, a first pipe, multiple second pipes, and multiple drip arrows. A first end of the first pipe is threaded through the tray to communicate with the output end of the water pump, and a second end of the first pipe communicates with an input j oint of the pipe joint.

Multiple output joints of the pipe j oint, the multiple second pipes, and the multiple drip arrows are disposed in one-to-one correspondence. Two ends of a second pipe communicate with a respective output joint and a respective drip arrow. In the height direction of the water-absorbing growbag, the multiple drip arrows are inserted into the planting soil in the water-absorbing growbag from top to bottom. The multiple drip arrows are distributed at intervals in the water-absorbing growbag.

In an embodiment, multiple support feet protrude from the outer bottom wall of the water storage basin. The multiple support feet are distributed at intervals in the circumferential direction of the water storage basin.

In an embodiment, a groove communicating with the interior of the water storage basin is formed in the interior of a support foot, and the water pump is disposed in the groove and connected to the water storage basin.

In an embodiment, the tray is provided with a seepage-shading structure. The seepage-shading structure includes a seepage hole and a first shading plate disposed on the tray. In the height direction of the water storage basin, the first shading plates are distributed at intervals, the first shading plate is disposed right below the seepage hole to form two seepage gaps with the tray. The two seepage gaps communicate with the seepage hole and the interior of the water storage basin.

In an embodiment, the shading area of the first shading plate is greater than or equal to the seepage area of the seepage hole.

In an embodiment, the tray is further provided with a maintenance opening communicating with the interior of the water storage basin, and the potting device further includes a water adding cover. The water adding cover is detachably connected to the tray and covers the maintenance opening.

In an embodiment, the water adding cover is provided with a water adding-shading structure. The water adding-shading structure includes a conical water adding hole, a first communicating hole, and multiple second shading plates which are disposed on the water adding cover. Two ends of the first communicating hole communicate with a small end of the conical water adding hole and the interior of the water storage basin, respectively, and a large end of the conical water adding hole communicates outside. The multiple second shading plates are disposed at intervals in the first communicating hole. The second shading plate is disposed at an included angle relative to the bearing surface of the tray.

### BRIEF DESCRIPTION OF DRAWINGS

FIG. 1 is a structural view of a potting device provided by a specific embodiment of the present disclosure;
FIG. 2 is a partial structural view one of the potting device provided by the specific embodiment of the present disclosure;
FIG. 3 is a partial structural view two of the potting device provided by the specific embodiment of the present disclosure;
FIG. 4 is a partial structural view three of the potting device provided by the specific embodiment of the present disclosure; and
FIG. 5 is a partial structural view four of the potting device provided by the specific embodiment of the present disclosure.

In the drawings:
1. water storage basin; 11. support foot; 12. groove; 13. annular lapping surface;
2. tray; 21. first shading plate; 22. maintenance opening; 23. reinforcement rod; 24. reinforcement rib; 25. first center through hole; 26. lapping rim; 27. avoidance groove; 28. installation hole; 29. seepage hole;
3. water-absorbing growbag; 31. handle strap; 32. hanging hole;
4. first watering structure; 41. water-absorbing rope; 42. rubber plug; 43. socket;
5. second watering structure; 51. water pump; 511. electric wire; 52. pipe joint; 53. first pipe; 54. second pipe; 55. drip arrow;
6. water adding cover; 61. conical water adding hole; 62. second shading plate;
7. column; 71. second center through hole; 72. second communicating hole.

### DETAILED DESCRIPTION

The present disclosure is described below in conjunction with drawings and embodiments. It is to be understood that the embodiments described herein are intended to only illustrate the present disclosure and not to limit the present disclosure. Additionally, it is to be noted that for ease of description, only part, not all, of structures related to the present disclosure are illustrated in the drawings.

In the description of the present disclosure, the terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in the present disclosure may be understood based on specific situations.

In the present disclosure, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present disclosure. In addition, the terms "first" and "second" are only used for distinguishing between descriptions and have no special meanings.

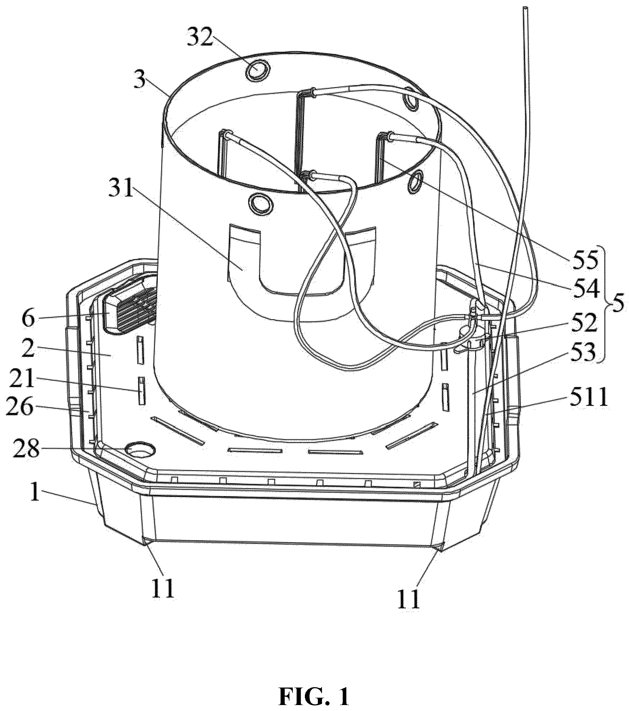

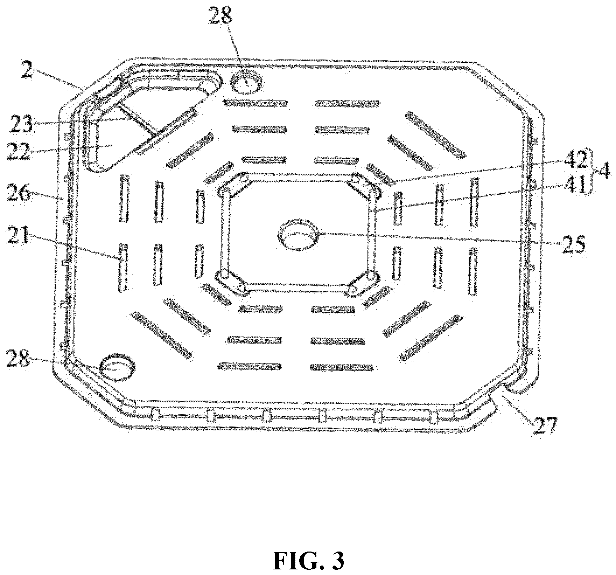

The present disclosure provides a potting device. As shown in FIGS. 1 to 5, the potting device includes a water storage basin 1, a tray 2, and a water-absorbing growbag 3. The tray 2 laps on the water storage basin 1. The water-absorbing growbag 3 is placed on the tray 2. The potting device further includes a first watering structure 4 or a second watering structure 5. The first watering structure 4 includes a water-absorbing rope 41 lapping on the tray 2. A portion of the water-absorbing rope 41 is submerged in water in the water storage basin 1. The water-absorbing growbag 3 overlies on the water-absorbing rope 41. The second watering structure 5 includes a pipe assembly and a water pump 51 disposed in the water storage basin 1. An input end of the water pump 51 communicates with the interior of the water storage basin 1, and an output end of the water pump 51 communicates with a planting soil in the water-absorbing growbag 3 through the pipe assembly.

When the first watering structure 4 of the potting device is used, the water-absorbing growbag 3 is placed on the tray 2 and overlies on the water-absorbing rope 41. The water-absorbing growbag 3 is configured to carry a planting soil and a plant so that the water-absorbing growbag 3 is in close contact with the water-absorbing rope 41 under the gravity of the planting soil and the plant. Both the water-absorbing growbag 3 and the water-absorbing rope 41 have water-absorbing quality. With the cooperation between the water-absorbing rope 41 and the water-absorbing growbag 3, not only the efficiency in watering the plant is improved, but also the structure of the water-absorbing growbag 3 is effectively simplified, thereby reducing the production and use cost of the potting device. When the second watering structure 5 is used, the water-absorbing growbag 3 is placed on the tray 2, and the planting soil and the plant in the water-absorbing growbag 3 are replenished with water by controlling the water pump 51, thereby effectively improving the efficiency in watering the plant. In the process of replenishing the planting soil and the plant in the water-absorbing growbag 3 with water through the water pump 51, the replenished water may seep from the outer periphery and bottom of the water-absorbing growbag 3 so that the replenished water may be spread into the planting soil, thereby effectively improving the water distribution uniformity of the planting soil in the water-absorbing growbag 3.

Therefore, the potting device effectively simplifies the structure of the water-absorbing growbag 3, reduces the production and use cost of the potting device, and effectively improves the watering effect on the plant.

Optionally, in this embodiment, the water-absorbing growbag 3 is a water-absorbing cloth bag. It is to be understood that the water-absorbing growbag 3 may also be produced using other water-absorbing materials.

Optionally, as shown in FIG. 1, two handle straps 31 are disposed at an interval on the outer periphery of the water-absorbing growbag 3 to make it easy to move the water-absorbing growbag 3.

Optionally, as shown in FIG. 1, in the height direction of the water-absorbing growbag 3, multiple hanging holes 32 are disposed at intervals on the upper end of the water-absorbing growbag 3 in the circumferential direction. When the total weight of the water-absorbing growbag 3, the planting soil, and the plant is relatively heavy, the water-absorbing growbag 3 may be hoisted through the hanging holes 32.

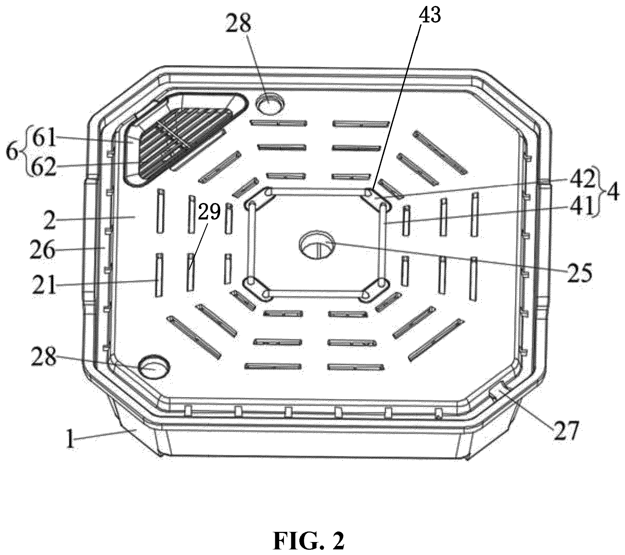

As shown in FIGS. 2 to 4, the first watering structure 4 further includes a rubber plug 42, and a socket 43 communicating with the interior of the water storage basin 1 is disposed on the tray 2. The rubber plug 42 is inserted into the socket 43. The water-absorbing rope 41 is threaded through the rubber plug 42 and is partially submerged in the water in the water storage basin 1. In this manner, the water-absorbing rope 41 laps on the tray 2 and is partially immersed in the water in the water storage basin 1.

As shown in FIGS. 2 to 4, multiple rubber plugs 42 are provided. The multiple rubber plugs 42 are distributed at intervals in the circumferential direction of the tray 2. Each rubber plug 42 is provided with two spaced lapping holes. One water-absorbing rope 41 is disposed between two lapping holes close to each other of any two adjacent rubber plugs 42, and two ends of the water-absorbing rope 41 are threaded through the two lapping holes, respectively. In this manner, the working performance of the first watering structure 4 can be improved. The first watering structure 4 formed by multiple rubber plugs 42 and multiple water-absorbing ropes 41 may be substantially annular, and the effect of water spreading in the planting soil can be further improved, thereby improving the water distribution uniformity of the planting soil in the water-absorbing growbag 3. In this embodiment, as shown in FIGS. 2 to 4, illustratively, four rubber plugs 42 and four water-absorbing ropes 41 are provided.

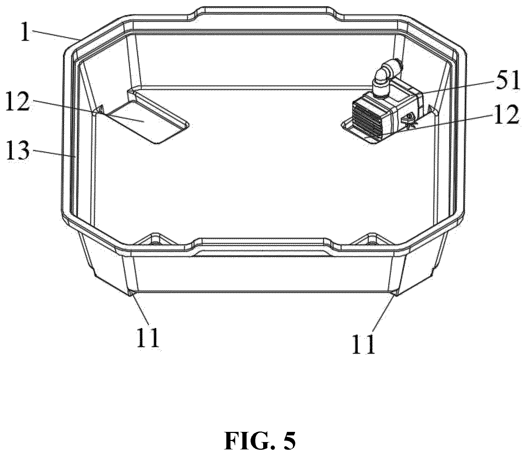

As shown in FIGS. 1 and 5, the pipe assembly includes a pipe joint 52, a first pipe 53, multiple second pipes 54, and multiple drip arrows 55. A first end of the first pipe 53 is threaded through the tray 2 to communicate with the output end of the water pump 51, and a second end of the first pipe 53 opposite to the first end of the first pipe 53 communicates with an input joint of the pipe joint 52. Multiple output joints of the pipe joint 52, the multiple second pipes 54, and the multiple drip arrows 55 are disposed in one-to-one correspondence. Two ends of a second pipe 54 communicate with a respective output joint and a respective drip arrow 55. In the height direction of the water-absorbing growbag 3, the multiple drip arrows 55 are inserted into the planting soil in the water-absorbing growbag 3 from top to bottom. The multiple drip arrows 55 are distributed at intervals in the water-absorbing growbag 3. In this manner, the planting soil and the plant in the water-absorbing growbag 3 are replenished with water. The drip arrow 55 may adopt a drip arrow in the related art, and the details are not repeated here.

In this embodiment, the first pipe 53 communicates with the output end of the water pump 51 through a quick-plug adapter. As shown in FIGS. 1 to 4, an avoidance groove 27 is recessed inwardly from the outer peripheral wall of the tray 2, and the first end of the first pipe 53 is threaded through the avoidance groove 27 to communicate with the output end of the water pump 51. The electric wire 511 of the water pump 51 is threaded through the avoidance groove 27 and electrically connected to an external electric device.

In this embodiment, as shown in FIG. 1, illustratively, four second pipes 54 are provided, and the pipe joint 52 is a five-way joint. It is to be understood that the number of second pipes 54 to be provided may be adaptively adjusted according to actual planting requirements.

Illustratively, the pipe diameter of the first pipe 53 ranges from 4 mm to 7 mm, and the pipe diameter of the second pipe 54 ranges from 3 mm to 5 mm. It is to be understood that the minimum pipe diameter of the first pipe 53 is larger than the minimum pipe diameter of the second pipe 54 so that the efficiency in transporting water to the multiple second pipes 54 can be improved. The pipe diameter of the first pipe 53 and the pipe diameter of the second pipe 54 may also be adaptively adjusted according to actual planting requirements.

Optionally, both the first pipe 53 and the second pipe 54 are hoses to make installation and adjustment easy.

As shown in FIGS. 1 and 5, multiple support feet 11 protrude from the outer bottom wall of the water storage basin 1. The multiple support feet 11 are distributed at intervals in the circumferential direction of the water storage basin 1. In this manner, the bottom of the water storage basin 1 can be ventilated, thereby preventing water from being accumulated at the bottom of the water storage basin 1.

As shown in FIGS. 1 and 5, a groove 12 communicating with the interior of the water storage basin 1 is formed in the interior of a support foot, and the water pump 51 is disposed in the groove 12 and connected to the water storage basin 1. By disposing the water pump 51 in the groove 12, the water pump 51 may better pump the water in the water storage basin 1 into the planting soil in the water-absorbing growbag 3. In this manner, for example, when the liquid level in the water storage basin 1 is lower than a certain level, the water pump 51 can effectively pump the water in the water storage basin 1 into the planting soil in the water-absorbing growbag 3. The water pump 51 is connected to the water storage basin 1 by riveting, threaded connection or the like.

As shown in FIGS. 1 to 4, the tray 2 is provided with seepage-shading structures. The seepage-shading structure includes a seepage hole 29 and a first shading plate 21 disposed on the tray 2. In the height direction of the water storage basin 1, the first shading plates 21 are distributed at intervals, and the first shading plate 21 is disposed right below the seepage hole 29 to form two seepage gaps with the tray 2. The two seepage gaps communicate with the seepage hole 29 and the interior of the water storage basin 1. In this manner, the water seeping from the water-absorbing growbag 3 can be recollected into the water storage basin 1 through the seepage hole 29 and the seepage gaps, thereby improving the water utilization rate. In addition, by disposing the first shading plate 21 at intervals right below the seepage hole 29, the first shading plate 21 can block light and prevent the water in the water storage basin 1 from direct sunlight, thereby reducing evaporation of water. Moreover, the first shading plate 21 can also play a role in preventing external impurities from falling into the water storage basin 1, thereby reducing the risk of clogging of the water pump 51. It is to be understood that the height direction of the water-absorbing growbag 3 is parallel to the height direction of the water storage basin 1.

Optionally, the shading area of the first shading plate 21 is greater than or equal to the seepage area of the seepage hole 29. In this manner, the shading effect of the first shading plate 21 can be improved.

Optionally, multiple seepage-shading structures are provided. The multiple seepage-shading structures are distributed at intervals on the tray 2. In this manner, the water recollection effect and the water recollection efficiency of water recollection can be improved.

As shown in FIGS. 1 to 4, the tray 2 is further provided with a maintenance opening 22 communicating with the interior of the water storage basin 1, and the potting device further includes a water adding cover 6. The water adding cover 6 is detachably connected to the tray 2 and covers the maintenance opening 22. By providing the maintenance opening 22, the maintenance opening 22 may allow the water adding cover 6 to be installed to make it convenient to add water to the water storage basin 1 and may also enable personnel to clean impurities in the water storage basin 1 through the maintenance opening 22 conveniently. In this embodiment, the water adding cover 6 is inserted into the maintenance port 22 and engaged with the tray 2. In this manner, the assembly and disassembly efficiency is high. In other embodiments, the water adding cover 6 and the tray 2 may be detachably connected to each other by threaded connection or the like.

Illustratively, as shown in FIG. 2, the water adding cover 6 is provided with a water adding-shading structure. The water adding-shading structure includes a conical water adding hole 61, a first communicating hole, and multiple second shading plates 62 which are disposed on the water adding cover 6. Two ends of the first communicating hole communicate with a small end of the conical water adding hole 61 and the interior of the water storage basin 1, respectively, and a large end of the conical water adding hole 61 communicates outside. The multiple second shading plates 62 are disposed at intervals in the first communicating hole. The second shading plate 62 is disposed at an included angle relative to the bearing surface of the tray 2. It is to be understood that the opening area of the large end of the conical water adding hole 61 is large to make it convenient to add water to the water storage basin 1 through the conical water adding hole 61. By disposing multiple second shading plates 62 at intervals in the first communicating hole and disposing the second shading plate 62 at an included angle relative to the bearing surface of the tray 2, water may flow into the water storage basin 1 through the conical water adding hole 61 and the first communicating hole in sequence, and the water in the water storage basin 1 may be prevented from direct sunlight, thereby further reducing the evaporation of water.

Optionally, as shown in FIGS. 2 to 4, a reinforcement rod 23 is disposed on the back surface of the tray 2. In the height direction of the water storage basin 1, the reinforcement rod 23 is disposed below the maintenance opening 22. The reinforcement rod 23 is configured to support the water adding cover 6 to improve the support stability of the tray 2 to the water adding cover 6.

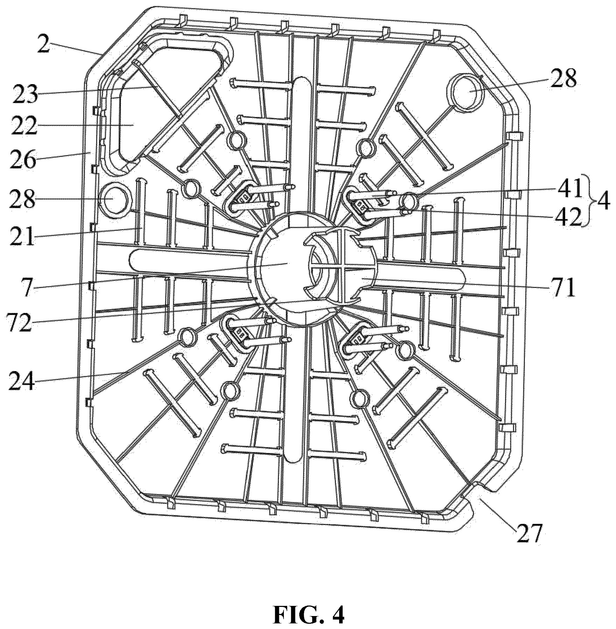

As shown in FIG. 4, the tray 2 is further provided with a reinforcement assembly. The reinforcement assembly includes a column 7 and multiple reinforcement ribs 24. The column 7 is inserted on the back surface of the tray 2 and supported by the inner bottom wall of the water storage basin 1. The multiple reinforcement ribs 24 are fixedly disposed on the back surface of the tray 2 and distributed at intervals on the outer periphery of the column 7 in the circumferential direction of the tray 2. In this manner, the structural strength and support performance of the tray 2 can be effectively improved, and the service life of the tray 2 can be prolonged.

Optionally, as shown in FIGS. 2 to 4, the tray 2 is provided with a first center through hole 25, and the column 7 is provided with a second center through hole 71 and a second communicating hole 72. Two ends of the second center through hole 71 in the axial direction communicate with the first center through hole 25 and the second communicating hole 72, respectively. The second communicating hole 72 also communicates with the interior of the water storage basin 1 so that the water seeping from the water-absorbing growbag 3 may also flow into the water storage basin 1 through the first center through hole 25, the second center through hole 71 and the second communicating hole 72 in sequence.

Illustratively, in this embodiment, as shown in FIGS. 2 to 4, the first watering structures 4 are distributed at intervals on the outer periphery of the first center through hole 25, and multiple seepage-shading structures are distributed at intervals on the outer periphery of the first watering structure 4.

As shown in FIGS. 1 to 5, a lapping rim 26 is disposed on the outer periphery of the tray 2, and the water storage basin 1 is provided with an annular lapping surface. The lapping rim 26 laps on the annular lapping surface 13 so that the tray 2 laps on the water storage basin 1.

As shown in FIGS. 1 to 4, the tray 2 is further provided with multiple installation holes 28. The installation holes 28 communicate with the interior of the water storage basin 1. The installation holes 28 are configured to allow a liquid level sensor, a temperature sensor and other structures to be installed.

## Claims

1. A potting device, comprising a water storage basin (1), a tray (2), and a water-absorbing growbag (3), wherein the tray (2) laps on the water storage basin (1), and the water-absorbing growbag (3) is placed on the tray (2);
the potting device further comprises a first watering structure (4) or a second watering structure (5);
wherein the first watering structure (4) comprises a water-absorbing rope (41) lapping on the tray (2), a portion of the water-absorbing rope (41) is submerged in water in the water storage basin (1), and the water-absorbing growbag (3) overlies on the water-absorbing rope (41);
wherein the second watering structure (5) comprises a pipe assembly and a water pump (51) disposed inside the water storage basin (1), an input end of the water pump (51) communicates with an interior of the water storage basin (1), and an output end of the water pump (51) communicates with a planting soil in the water-absorbing growbag (3) through the pipe assembly.

2. The potting device according to claim 1, wherein the first watering structure (4) further comprises a rubber plug (42), a socket (43) communicating with the interior of the water storage basin (1) is disposed on the tray (2), the rubber plug (42) is inserted into the socket (43), and the water-absorbing rope (41) is threaded through the rubber plug (42) and is partially submerged in the water in the water storage basin (1).

3. The potting device according to claim 2, wherein a plurality of rubber plugs (42) are provided, the plurality of rubber plugs (42) are distributed at intervals in a circumferential direction of the tray (2), and each of the plurality of rubber plugs (42) is provided with two spaced lapping hole;
one water-absorbing rope (41) is disposed between two lapping holes closest to each other of any two adjacent rubber plugs (42), and two ends of the water-absorbing rope (41) are threaded through the two lapping holes, respectively.

4. The potting device according to claim 1, wherein the pipe assembly comprises a pipe joint (52), a first pipe (53), a plurality of second pipes (54), and a plurality of drip arrows (55), a first end of the first pipe (53) is threaded through the tray (2) to communicate with the output end of the water pump (51), and a second end of the first pipe (53) communicates with an input joint of the pipe joint (52);
a plurality of output joints of the pipe joint (52), the plurality of second pipes (54), and the plurality of drip arrows (55) are disposed in one-to-one correspondence, and two ends of a second pipe (54) of the plurality of second pipes (54) communicate with a respective one of the plurality of output joints and a respective one of the plurality of drip arrows (55);
in a height direction of the water-absorbing growbag (3), the plurality of drip arrows (55) are inserted into the planting soil in the water-absorbing growbag (3) from top to bottom, and the plurality of drip arrows (55) are distributed at intervals in the water-absorbing growbag (3).

5. The potting device according to any one of claims 1 to 4, wherein a plurality of support feet (11) protrude from an outer bottom wall of the water storage basin (1), and the plurality of support feet (11) are distributed at intervals in a circumferential direction of the water storage basin (1).

6. The potting device according to claim 5, wherein a groove (12) communicating with the interior of the water storage basin (1) is formed in an interior of a support foot (11) of the plurality of support feet (11), and the water pump (51) is disposed inside the groove (12) and connected to the water storage basin (1).

7. The potting device according to any one of claims 1 to 4, wherein the tray (2) is provided with seepage-shading structures;
each of the seepage-shading structures comprises a seepage hole (29) and a first shading plate (21) which are disposed on the tray (2);
in a height direction of the water storage basin (1), first shading plates (21) are distributed at intervals, the first shading plate (21) is disposed right below the seepage hole (29) to form two seepage gaps with the tray (2), and the two seepage gaps communicate with the seepage hole (29) and the interior of the water storage basin (1).

8. The potting device according to claim 7, wherein a shading area of the first shading plate (21) is greater than or equal to a seepage area of the seepage hole (29).

9. The potting device according to any one of claims 1 to 4, wherein the tray (2) is further provided with a maintenance opening (22) communicating with the interior of the water storage basin (1);
the potting device further comprises a water adding cover (6), and the water adding cover (6) is detachably connected to the tray (2) and covers the maintenance opening (22).

10. The potting device according to claim 9, wherein the water adding cover (6) is provided with a water adding-shading structure;
the water adding-shading structure comprises a conical water adding hole (61), a first communicating hole, and a plurality of second shading plates (62) which are disposed on the water adding cover (6);
two ends of the first communicating hole communicate with a small end of the conical water adding hole (61) and the interior of the water storage basin (1), respectively, and a large end of the conical water adding hole (61) communicates outside;
the plurality of second shading plates (62) are disposed at intervals in the first communicating hole, and a second shading plate (62) of the plurality of second shading plates (62) is disposed at an included angle relative to a bearing surface of the tray (2).
